# EUROPEAN PATENT APPLICATION

(11) **EP 4 350 855 A1**
(43) Date of publication of application: **10.04.2024**
(21) Application number: 22811056.5
(22) Date of filing: 13.04.2022
(51) Int. Cl.: H01M 50/204, B60K 1/04, B62D 21/00, H01M 50/233, H01M 50/242, H01M 50/244, H01M 50/249, H01M 50/262

(54) **BATTERY CASE STRUCTURE AND METHOD FOR PRODUCING BATTERY CASE STRUCTURE**

(30) Priority: 24.05.2021 JP 2021086711
(71) Applicant: G-Tekt Corporation, Saitama-city, Saitama 330-0854 (JP)
(72) Inventor: NEGISHI, Takumi, Hamura-shi, Tokyo 205-0023 (JP)
(74) Representative: Samson & Partner Patentanwälte mbB
(86) International application number: PCT/JP2022/017662
(87) International publication number: WO 2022/249782

(57) **Abstract**

A battery case structure includes an outer peripheral frame (6) including a first closed cross section portion (21) which is formed by joining a second steel plate portion (14b) to a first steel plate portion (14a) having a groove-shaped cross-sectional shape in an overlaid state and has a closed cross-sectional shape, and a concave portion (22) which is adjacent to the first closed cross section portion and has a groove-shaped cross section. The battery case structure includes a box portion (3) opening upward and configured to store a battery. The box portion (3) closes the concave portion (22), thereby forming a second closed cross section portion (38) adjacent to the first closed cross section portion (21) and having a closed cross-sectional shape. It is possible to provide a battery case structure that can be formed lightweight at a low manufacturing cost and can also prevent water from entering into the case.

## Description

### Technical Field

The present invention relates to a battery case structure that supports a driving battery under the floor of an electric vehicle and a manufacturing method thereof.

### Background Art

As a conventional battery case structure of this type, for example, as described in patent literatures 1 to 3, a plurality of closed cross section structures are employed for the outer peripheral frame that stores a battery.

The closed cross section structure of the battery case structure disclosed in patent literature 1 is formed by combining a plurality of sheet metal members. The closed cross section structure of the battery case structure disclosed in patent literature 2 is formed using an aluminum extrusion member. The battery case structure disclosed in patent literature 3 includes an outer peripheral frame formed by overlaying an outer plate on an inner plate formed by roll forming. The closed cross section structure is formed by the inner plate and the outer plate. The outer peripheral frame is overlaid on a bottom plate, thereby forming a battery case.

### Related Art Literature

### Patent Literature

Patent Literature 1: Japanese Patent Laid-Open No. 2019-202747
Patent Literature 2: Japanese Patent Laid-Open No. 2019-137354
Patent Literature 3: Japanese Patent Laid-Open No. 2019-096385

### Disclosure of Invention

### Problem to be Solved by the Invention

If the closed cross section structure is formed by combining a plurality of sheet metal members, as disclosed in patent literature 1, the number of components increases, and the weight increases. If an aluminum extrusion member is used, as disclosed in patent literature 2, the manufacturing cost is high. In the battery case structure disclosed in patent literature 3, the battery case is formed by welding the outer peripheral frame to the bottom plate. For this reason, a water stop sealer is essential. A portion sealed by the water stop sealer is readily broken or peeled by a side collision or a collision of a stone bounced by a front wheel (chipping), and water leakage may occur. The side collision here is a phenomenon that a collision load is applied from a side of the vehicle to the battery case structure.

It is an object of the present invention to provide a battery case structure that can be formed lightweight at a low manufacturing cost and can also prevent water from entering into the case, and a manufacturing method of a battery case structure.

### Means of Solution to the Problem

In order to achieve the above-described object, according to the present invention, there is provided a battery case structure that supports a driving battery under a floor of an electric vehicle, comprising an outer peripheral frame including a first closed cross section portion which is formed by joining a second steel plate portion to a first steel plate portion having a groove-shaped cross-sectional shape in an overlaid state and has a closed cross-sectional shape, and a concave portion which is adjacent to the first closed cross section portion and has a groove-shaped cross section, and a box portion opening upward and configured to store the battery,
wherein the box portion closes the concave portion, thereby forming a second closed cross section portion adjacent to the first closed cross section portion and having a closed cross-sectional shape.

According to the present invention, there is provided a method of manufacturing an outer peripheral frame used in a battery case structure, wherein after the outer peripheral frame is formed by roll forming and press forming, bending is performed, and a lap joining portion that is a portion where a first steel plate portion and a second steel plate portion are overlaid is then welded, thereby forming a first closed cross section portion.

According to the present invention, there is provided a method of manufacturing an outer peripheral frame used in a battery case structure, wherein the outer peripheral frame is formed by press-forming an outer member and an inner member and welding the outer member and the inner member.

### Effect of the Invention

According to a battery case structure of the present invention, it is possible to provide a battery case structure that can be formed lightweight at a low manufacturing cost and can also prevent water from entering into the case. Particularly, in the outer peripheral frame, at least one steel plate portion is roll-formed or press-formed to form a plurality of bending portions and joined to another steel plate portion near the bending portions, thereby forming lap joining portions. It is therefore possible to easily form the first closed cross section portion. The concave portion is formed adjacent to the first closed cross section portion, and the box portion closes the concave portion, thereby forming the second closed cross section portion. Thus forming the second closed cross section portion adjacent to the first closed cross section portion of the outer peripheral frame by the box portion closing the concave portion means that the structure can rationally be formed using a small number of materials (steel plate portions). Hence, employing this configuration is advantageous in reducing the weight of the vehicle body.

According to a manufacturing method of a battery case structure of the present invention, since a plurality of closed cross section structures can be formed by roll-forming a thin plate or by welding an outer member and an inner member each of which is formed by a press-formed article, an outer peripheral frame can be formed lightweight at a low cost.

### Brief Description of Drawings

Fig. 1 is a perspective view of a battery case structure according to the first embodiment;
Fig. 2 is an exploded perspective view of the battery case structure according to the first embodiment;
Fig. 3 is a sectional view viewed from the rear side of the left side end portion of the battery case structure according to the first embodiment;
Fig. 4 is a sectional view viewed from the rear side of the left side end portion of the battery case structure according to the first embodiment;
Fig. 5 is a sectional view viewed from the left side of the cross member portion of the battery case structure according to the first embodiment;
Fig. 6 is a flowchart for explaining a manufacturing method of the battery case structure according to the first embodiment;
Fig. 7A is a sectional view for explaining the manufacturing method of the battery case structure according to the first embodiment;
Fig. 7B is a sectional view for explaining the manufacturing method of the battery case structure according to the first embodiment;
Fig. 8 is a flowchart for explaining a manufacturing method of a battery case structure according to the second embodiment;
Fig. 9A is a sectional view of an outer member used to execute the manufacturing method of the battery case structure according to the second embodiment;
Fig. 9B is a sectional view of an inner member used to explain the manufacturing method of the battery case structure according to the second embodiment;
Fig. 9C is a sectional view for explaining the manufacturing method of the battery case structure according to the second embodiment;
Fig. 10 is a sectional view showing a modification of a box portion according to the third embodiment;
Fig. 11 is a sectional view for explaining the configuration of a bracket according to the fourth embodiment;
Fig. 12 is a perspective view showing a use form of a bracket according to the fifth embodiment;
Fig. 13 is a perspective view of the bracket according to the fifth embodiment;
Fig. 14 is an exploded perspective view of the bracket according to the fifth embodiment;
Fig. 15 is a perspective view of the bracket according to the fifth embodiment;
Fig. 16 is a perspective sectional view of the bracket according to the fifth embodiment;
Fig. 17 is a plan view of a box portion and the bracket according to the fifth embodiment;
Fig. 18 is a sectional view viewed from the rear side of the left side end portion of a battery case structure according to the sixth embodiment;
Fig. 19 is a sectional view viewed from the rear side of the left side end portion of a battery case structure according to the seventh embodiment;
Fig. 20 is a sectional view for explaining a pole collision;
Fig. 21 is a sectional view showing the welding positions of a bracket according to the seventh embodiment;
Fig. 22 is a perspective view of the bracket according to the seventh embodiment;
Fig. 23 is a sectional view of the bracket according to the seventh embodiment;
Fig. 24 is a perspective view showing the connecting portion between the front end portion of a side frame and a front cross member;
Fig. 25 is a perspective view showing the connecting portion between the front end portion of the side frame and the front cross member;
Fig. 26 is a sectional view of the front cross member;
Fig. 27 is a perspective view showing the connecting portion between the rear end portion of the side frame and a rear cross member;
Fig. 28 is a perspective view showing the connecting portion between the rear end portion of the side frame and the rear cross member;
Fig. 29 is a sectional view of the rear cross member;
Fig. 30 is a perspective view showing the connecting portion between the front end portion of the side frame and the front cross member;
Fig. 31 is a perspective view showing the connecting portion between the front end portion of the side frame and the front cross member;
Fig. 32 is a perspective view showing the connecting portion between the rear end portion of the side frame and the rear cross member;
Fig. 33 is a perspective view showing the connecting portion between the rear end portion of the side frame and the rear cross member;
Fig. 34A is a sectional view for explaining that the second closed cross section portion of the side frame continues to the closed cross section portion of the front cross member;
Fig. 34B is a sectional view for explaining that the second closed cross section portion of the side frame continues to the closed cross section portion of the rear cross member; and
Fig. 35 is a perspective sectional view showing the concave portion of the side frame.

### Best Mode for Carrying Out the Invention

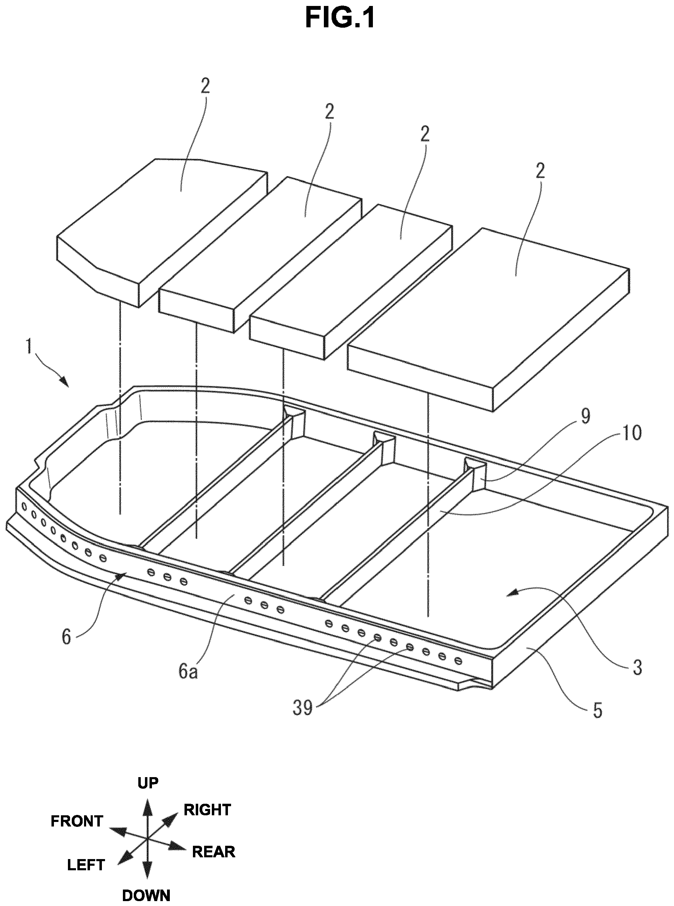

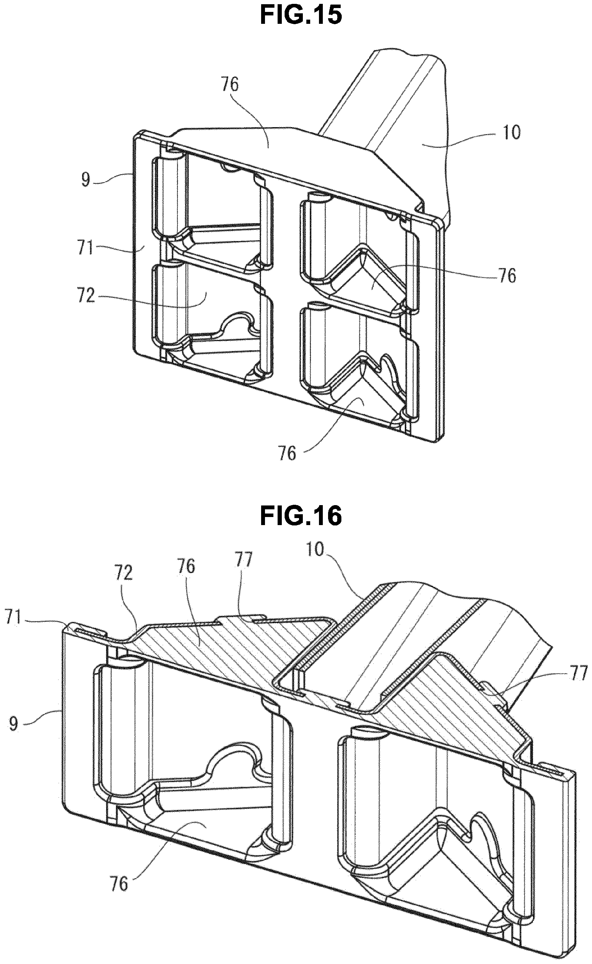

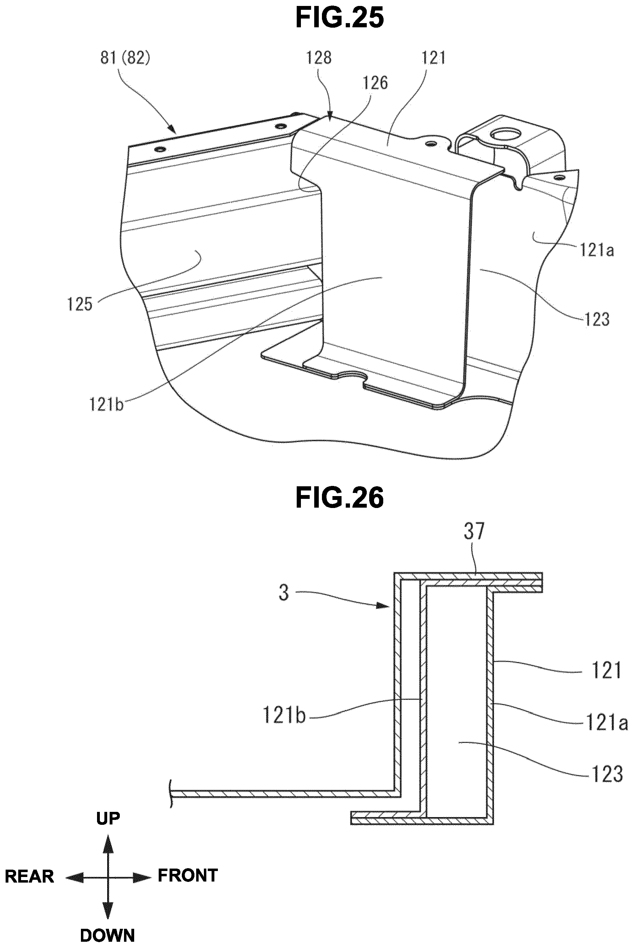

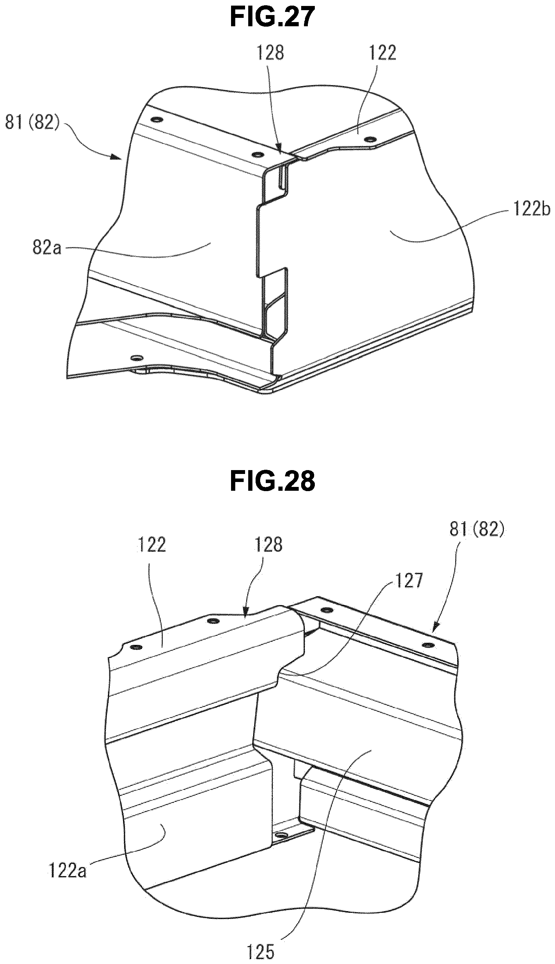

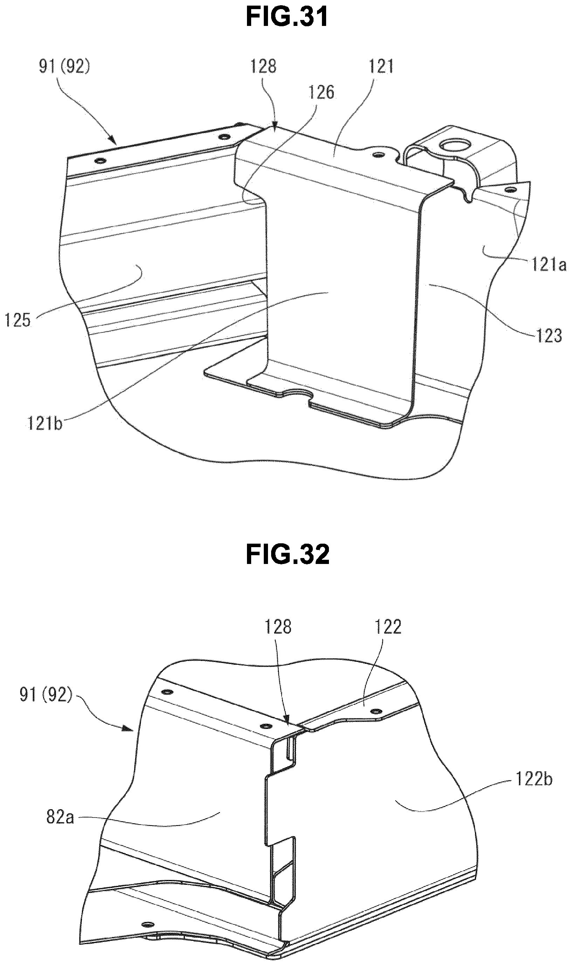

Various embodiments of a battery case structure and a manufacturing method of a battery case structure according to the present invention will be described below in detail with reference to Figs. 1 to 35.

### (First Embodiment)

A battery case structure 1 shown in Fig. 1 supports driving batteries 2 under the floor of an electric vehicle (not shown), and is formed by attaching a plurality of functional components to be described later to a box-shaped box portion 3 (to be referred to as a battery case or a battery tray) for storing the batteries 2.

The battery case structure 1 is attached to vehicle body (not shown) in such a posture that the diagonal upper left side is directed to the front side of the electric vehicle in Fig. 1. Hereafter, when mentioning a direction in a description of a component of the battery case structure 1, it is the direction in a state in which the battery case structure 1 is attached to the vehicle body. That is, a description will be made defining the upper left side as the front side, and the lower right side as the rear side in Fig. 1. In addition, a description will be made defining the lower left side as the left side, and the upper right side as the right side.

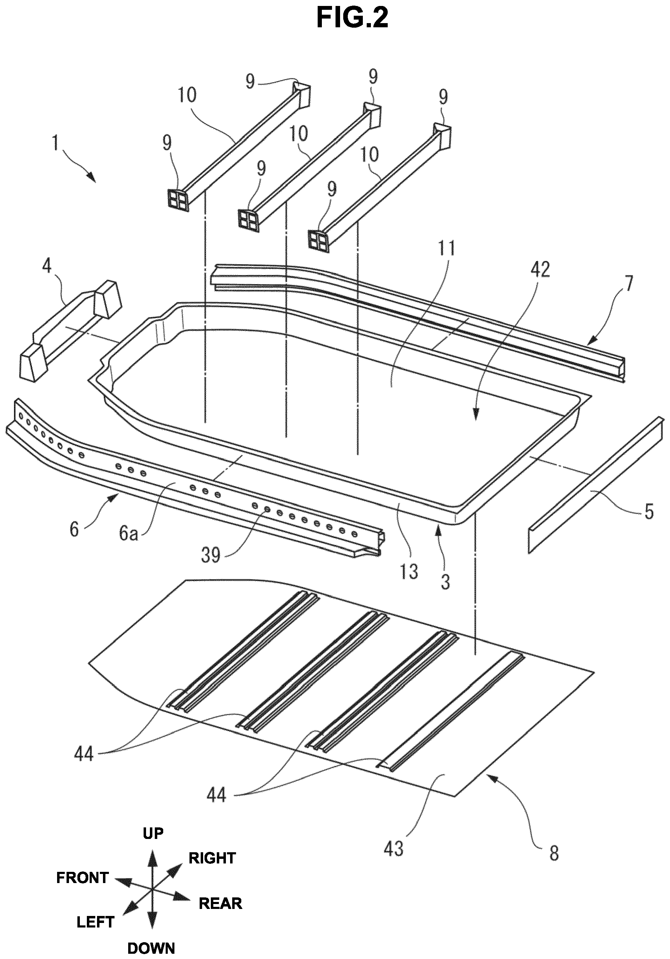

As shown in Fig. 2, the plurality of functional components to be attached to the box portion 3 are a front frame 4 attached to the front end portion of the box portion 3, a rear frame 5 attached to the rear end portion of the box portion 3, a pair of left and right outer peripheral frames 6 and 7 attached to the left and right sides of the box portion 3, a cover 8 attached to the lower surface of the box portion 3, three cross members 10 attached to the inside of the box portion 3 via brackets 9, a plate-shaped lid (not shown) that closes the opening portion of the box portion 3, and the like.

The box portion 3 is formed into a box shape opening upward. As a material that forms the box portion 3, not only a steel plate but also, for example, CFRP (Carbon Fiber Reinforced Plastics) that is a resin reinforced/strengthened by an aluminum alloy or carbon fiber can be used.

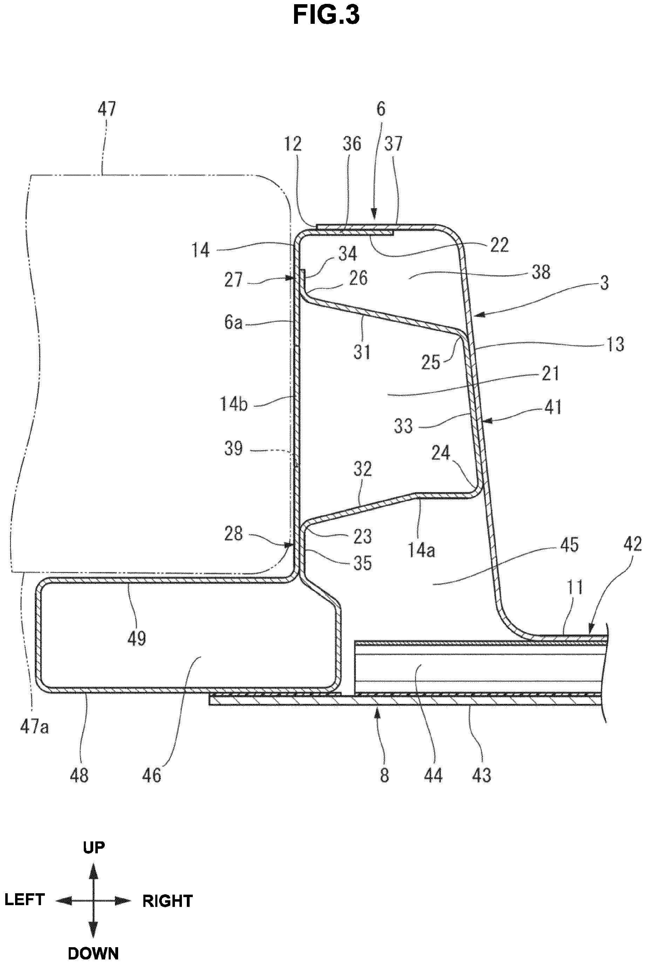

The box portion 3 according to this embodiment has a bath tub shape, and includes an upper end flange 37 and a side wall 13, which extend over the whole region of the periphery along an outer edge 12. The lower end of the side wall 13 continues to a bottom wall 11, as shown in Fig. 3.

The front frame 4 and the rear frame 5 are formed by combining a plurality of steel plates. An aluminum casting or an aluminum extrusion member may also be used.

### (Configuration of Outer Peripheral Frames)

The outer peripheral frames 6 and 7 are each formed into a predetermined shape using one or two steel plates. The outer peripheral frames 6 and 7 according to this embodiment are each formed by one steel plate 14 (see Fig. 3). The outer peripheral frames 6 and 7 according to this embodiment are made of a material (for example, a high tensile steel plate) whose tensile strength is higher than the box portion 3. One steel plate 14 is formed into a predetermined shape by roll forming, press forming, bending, or the like. The method of forming the outer peripheral frames 6 and 7 will be described later.

The outer peripheral frame 6 on the left side and the outer peripheral frame 7 on the right side are formed to be symmetrical in the left-and-right direction. For this reason, the outer peripheral frame 6 will be described below, and a description of the outer peripheral frame 7 will be omitted.

As shown in Fig. 3, a first closed cross section portion 21 and a concave portion 22 are formed in the upper portion of the outer peripheral frame 6. Fig. 3 is a sectional view of the outer peripheral frame 6 on the left side. The first closed cross section portion 21 is formed using a plurality of bending portions 23 to 26 and a plurality of lap joining portions 27 and 28 such that a closed cross-sectional shape is formed. Here, "lap joining portion" means a portion where two plate members are overlaid and joined. The bending portions 23 to 26 at four points are formed in one end portion 14a of the steel plate 14, thereby forming an upper horizontal wall 31, a lower horizontal wall 32, and an upper vertical wall 33 to form a box-shaped cross section. The one end portion 14a of the steel plate corresponds to a "first steel plate portion" of the present invention. The lap joining portions 27 and 28 are provided in the overlap portion between the upper horizontal wall 31 and the other end portion 14b of the steel plate 14, and in the overlap portion between the lower horizontal wall 32 and the other end portion 14b of the steel plate 14, respectively. The other end portion 14b of the steel plate 14 corresponds to a "second steel plate portion" of the present invention. Of the lap joining portions 27 and 28, the lap joining portion 27 on the upper side is formed by overlaying a projecting piece 34 extending upward from the distal end of the upper horizontal wall 31 on the other end portion 14b of the steel plate 14 and welding the overlap portion by spot welding. The lap joining portion 28 on the lower side is formed by overlaying a lower vertical wall 35 extending downward from the distal end of the lower horizontal wall 32 on the other end portion 14b of the steel plate 14 and welding the overlap portion by spot welding. Note that in this embodiment, as described above, spot welding is used to form the lap joining portions 27 and 28. The welding method can appropriately be changed and, for example, arc welding or laser welding may be used.

The concave portion 22 is formed by the upper horizontal wall 31 that forms the first closed cross section portion 21 and an upper wall 36 that is formed to extend to the upper side of the lap joining portion 27 of the upper horizontal wall 31 and has an L-shaped cross section. The upper end flange 37 of the box portion 3 is overlaid on the upper surface of the upper wall 36 and fixed by fixing screws (not shown) or welding. When the box portion 3 is thus attached to the upper wall 36, the box portion 3 closes the concave portion 22, and a second closed cross section portion 38 having a closed cross-sectional shape is formed adjacently on the first closed cross section portion 21.

The side wall 13 of the box portion 3 is overlaid on the upper vertical wall 33 of the outer peripheral frame 6 and welded and joined by spot welding. Note that if the side wall 13 is made of an aluminum alloy, mechanical fastening using rivets or the like is performed. Spot welding of this portion is done by inserting welding electrodes (not shown) into openings 39 formed in an outer surface 6a (see Fig. 1) of the outer peripheral frame 6. The openings 39 are provided at a plurality of positions apart at a predetermined interval in the longitudinal direction of the outer peripheral frame 6.

In the outer peripheral frame 6 according to this embodiment, the rigidity/strength of the first closed cross section portion 21 is increased by the lap joining portions at three points including a lap joining portion 41 (see Fig. 3) between the upper vertical wall 33 and the side wall 13 and the above-described lap joining portions 27 and 28 at two points.

The cover 8 that covers the box portion 3 from the lower side is attached to a bottom portion 42 including the bottom wall 11 of the box portion 3. As shown in Fig. 2, the cover 8 is formed by a plate-shaped cover main body 43, and a plurality of reinforcing members 44 overlaid on the upper surface of the cover main body 43 and adhered. The cover main body 43 is adhered, from the lower side, to the front frame 4, the rear frame 5, and the left and right outer peripheral frames 6 and 7 of the battery case structure 1, thereby increasing the support strength of the battery case structure 1 that supports the heavy batteries and protecting the box portion 3 from a collision of a projection of a road surface or small stones bounced by tires.

The reinforcing member 44 is formed by bending a steel plate into a predetermined shape, and is formed to extend from the outer peripheral frame 6 on the left side to the outer peripheral frame 7 on the right side. The reinforcing members 44 according to this embodiment are fixed to the bottom wall 11 of the box portion 3 by attachment bolts (not shown), spot welding, or mechanical fastening.

When the box portion 3 with the cover 8 attached is attached to the outer peripheral frames 6 and 7, and the cover main body 43 is fixed to the lower surface of the outer peripheral frame 6 by adhesion and mechanical fastening and thus connected to the outer peripheral frame 6, as shown in Fig. 3, a third closed cross section portion 45 having a closed cross-sectional shape is formed on the lower side of the first closed cross section portion 21. The third closed cross section portion 45 is formed by the lower horizontal wall 32, the side wall 13 of the box portion 3, the cover 8 including the reinforcing members 44, and the lower vertical wall 35 of the outer peripheral frame 6.

A fourth closed cross section portion 46 having a closed cross-sectional shape is formed at the lower end portion of the outer peripheral frame 6. The fourth closed cross section portion 46 is formed into a horizontally long rectangular shape to project toward a lower surface 47a (side sill lower surface) of a side sill 47. More specifically, the fourth closed cross section portion 46 is formed to project toward the outer side of the electric vehicle along the lower surface of the side sill 47, and is formed to have a closed cross-sectional shape when viewed from the front-and-rear direction of the electric vehicle.

The fourth closed cross section portion 46 according to this embodiment is formed by a bottom wall 48 connected to the lower end of the lower vertical wall 35 and formed into a box shape opening upward, and a bottom-side horizontal wall 49 extending in the left-and-right direction to close the opening portion of the bottom wall 48.

Hence, the outer peripheral frame 6 is formed into a substantially L shape by two closed cross section portions including the fourth closed cross section portion 46 and the first closed cross section portion 21 on the upper side of that.

The outer peripheral frame 6 is a hollow body extending in the front-and-rear direction because the first closed cross section portion 21 and the fourth closed cross section portion 46 are provided. The above-described lap joining portion 28 on the lower side is provided between the first closed cross section portion 21 and the fourth closed cross section portion 46.

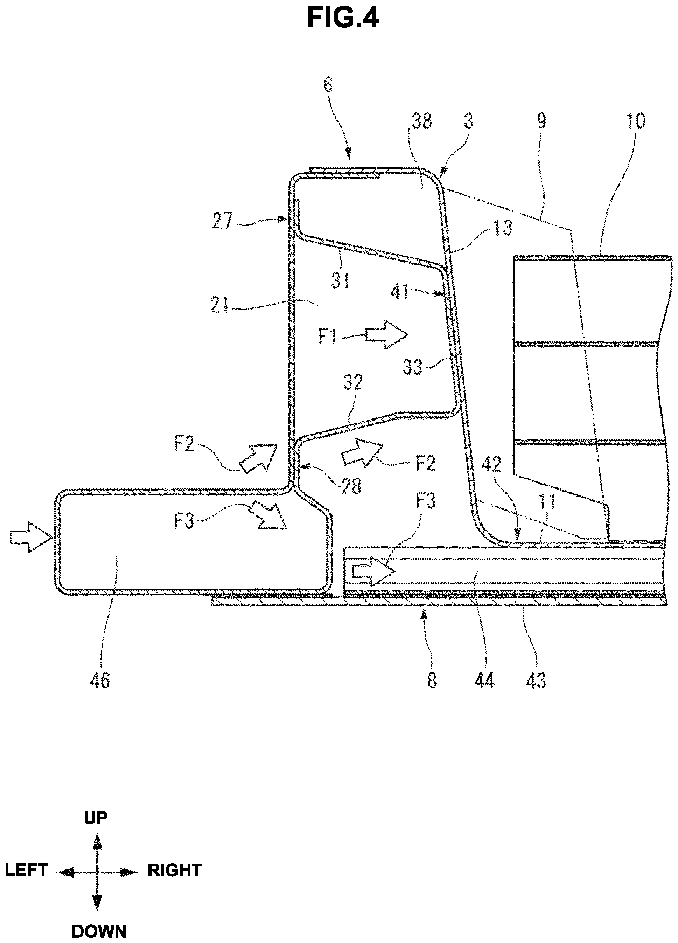

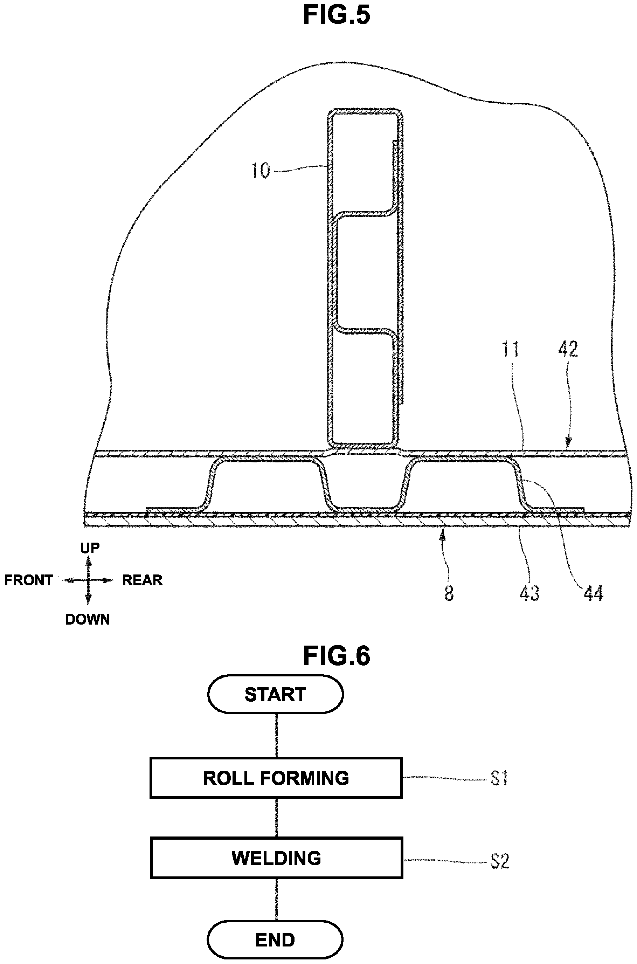

As shown in Fig. 4, the first closed cross section portion 21 confronts the cross members 10 arranged along the upper surface of the bottom portion 42 of the box portion 3. The configuration of the cross member 10 will be described later. Also, the fourth closed cross section portion 46 confronts the reinforcing members 44 arranged along the upper surface of the cover 8. As shown in Fig. 5, the reinforcing member 44 is provided to extend to the front and rear sides with respect to the cross member 10. The cross-sectional shape of the reinforcing member 44 located under the cross member 10 is a substantially W shape extending in the left-and-right (vehicle width) direction.

### (Manufacturing Method of Outer Peripheral Frame)

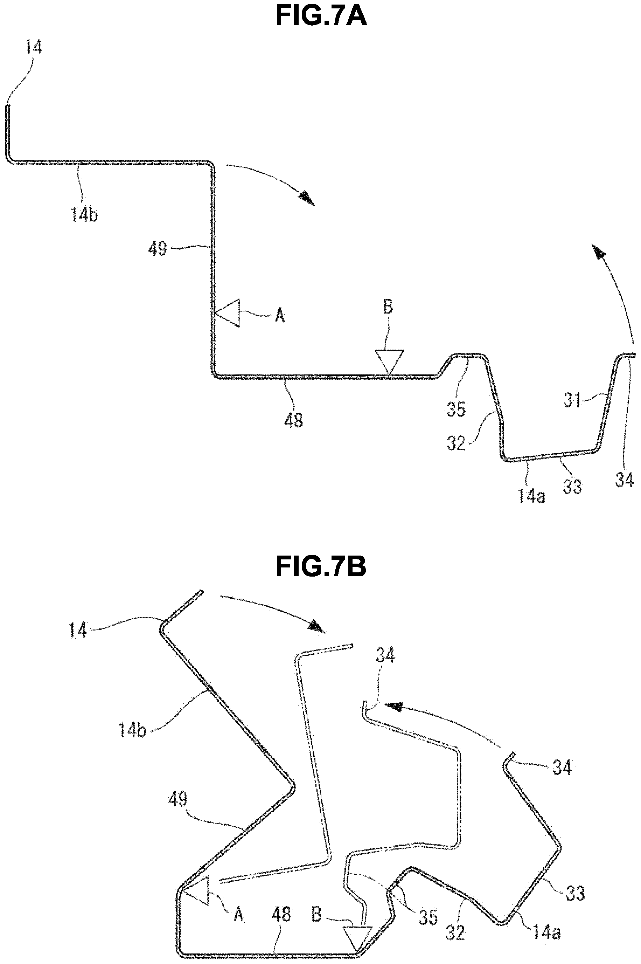

When forming the outer peripheral frame 6 by one steel plate 14, a method as shown in the flowchart of Fig. 6 and in Figs. 7A and 7B is used. As shown in Fig. 6, this manufacturing method is executed by a roll forming step S1 and a welding step S2. For example, as shown in Fig. 7A, the steel plate 14 is bent from the one end portion 14a by roll forming to sequentially form the projecting piece 34, the upper horizontal wall 31, the upper vertical wall 33, the lower horizontal wall 32, and the lower vertical wall 35, thereby forming a predetermined shape. The other end side is also formed into a predetermined shape by bending the other end portion 14b by roll forming to sequentially form the upper wall 36, the bottom-side horizontal wall 49, and the bottom wall 48.

In the roll forming, the steel plate 14 is bent in a valley fold using two points that are the two end portions of the bottom wall 48 as bending fulcrums A and B and thus formed into a predetermined standing shape, as shown in Fig. 7B. After that, the projecting piece 34 and the lower vertical wall 35 are welded to the other end portion 14b of the steel plate 14 by arc welding or laser welding, and arc welding or laser welding or spot welding, respectively. By this welding, the lap joining portions 27 and 28 at two points are formed, and the outer peripheral frame 6 is completed.

### (Second Embodiment)

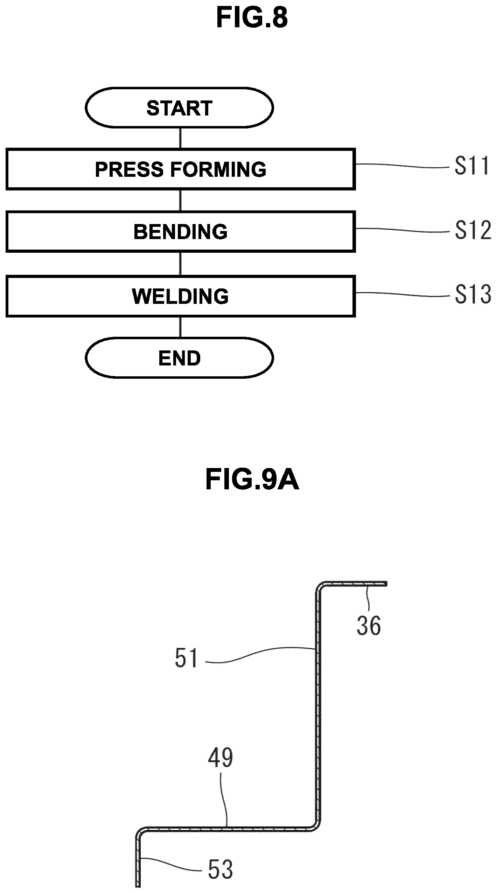

On the other hand, when forming an outer peripheral frame 6 by two steel plates, a method as shown in the flowchart of Fig. 8 and in Figs. 9A to 9C is used.

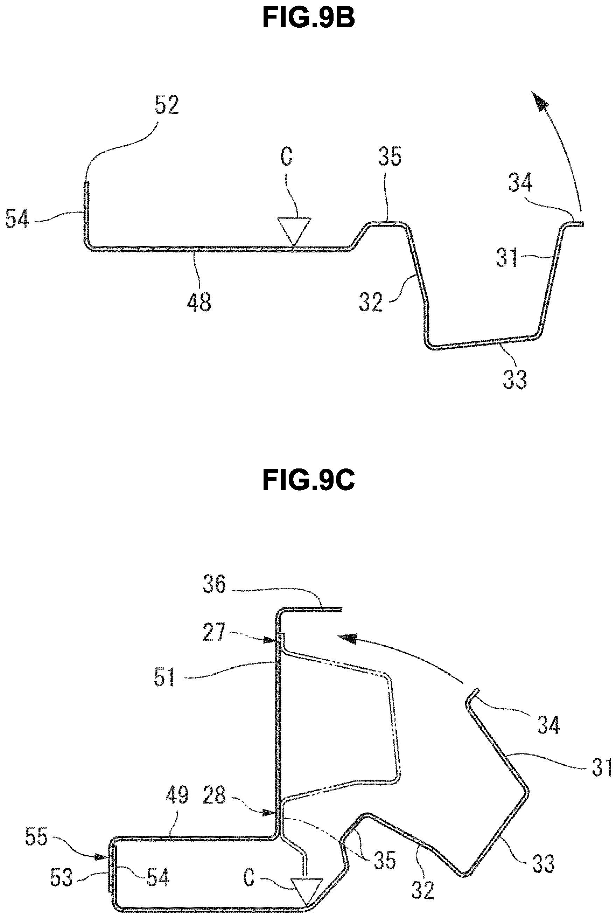

As shown in Fig. 8, this manufacturing method is executed by a press forming step S11, a bending step S12, and a welding step S13. That is, as shown in Figs. 9A and 9B, an outer member 51 that is the outer half of the outer peripheral frame 6, and an inner member 52 that is the inner half are each formed into a predetermined shape by press forming. In the outer member 51, a portion including an upper wall 36 and a bottom-side horizontal wall 49, and an overlap portion 53 are formed. In the inner member 52, a portion including a projecting piece 34, an upper horizontal wall 31, an upper vertical wall 33, a lower horizontal wall 32, a lower vertical wall 35, and a bottom wall 48, and an overlap portion 54 are formed.

Then, as shown in Fig. 9B, the steel plate is bent in a valley fold using the intermediate portion of the inner member 52 as a bending fulcrum C.

After that, as shown in Fig. 9C, the outer member 51 is overlaid on the inner member 52, and the overlap portion 53 and the overlap portion 54 are welded by spot welding, thereby forming a lap joining portion 55. At the same time, the projecting piece 34 at one end of the inner member 52 and the lower vertical wall 35 are welded to the outer member 51 by arc welding or laser welding and arc welding or laser welding or spot welding, respectively, thereby forming lap joining portions 27 and 28. The lap joining portions 27, 28, and 55 at three points are thus formed, thereby completing the outer peripheral frame 6.

### (Third Embodiment: Modification of Box Portion)

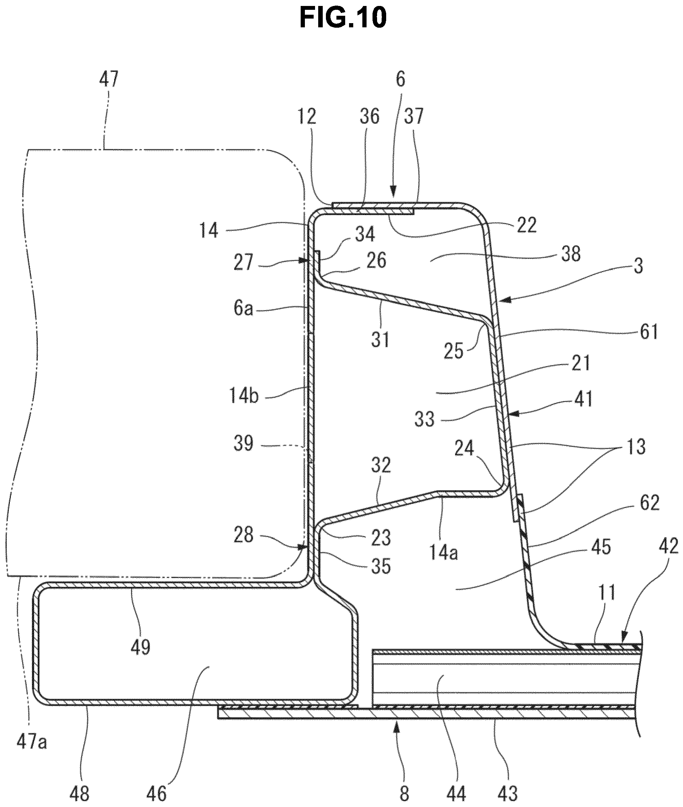

A box portion can be formed as shown in Fig. 10. In Fig. 10, members that are the same as or similar to those described with reference to Figs. 1 to 9 are denoted by the same reference numerals, and a detailed description thereof will be omitted.

A box portion 3 shown in Fig. 10 is formed by an upper side wall 61 that closes a concave portion 22, and a box-shaped bottom wall 62 connected to the upper side wall 61. The upper side wall 61 forms the upper half of the box portion 3, and is formed by a steel plate. The bottom wall 62 forms the lower half of the box portion 3, and is formed into a box shape opening upward using, for example, a plastic material. If the bottom wall 62 is made of a plastic material, connection between the bottom wall 62 and the upper side wall 61 can be performed using, for example, an adhesive and bolts/nuts (none are shown) together. In this case, a side wall 13 described above is formed by the upper side wall 61 and the bottom wall 62.

### (Fourth Embodiment)

A cross member 10 is formed as a hollow body (see Fig. 5) extending in the left-and-right direction and fixed to a side wall 13 of a box portion 3 via brackets 9 to be described later. The cross member 10 according to this embodiment is formed into a predetermined shape by roll forming using a steel plate as a material.

To attach the cross member 10 made of a steel plate to the box portion 3 made of an aluminum alloy, conventionally, a multi-material structure is employed to rationalize the structure. However, if the multi-material structure is employed, a necessary joining technique changes due to a reason such as accessibility at the time of assembling or a material combination. Hence, examinations and types of joining techniques to be employed increase, resulting in an increase in cost. For this reason, there is a demand for omitting selection and introduction of a different material joining technique and implementing an inexpensive multi-material structure.

The bracket 9 according to this embodiment can meet this requirement, and is configured to obviate the necessity of different material joining in joining members.

As shown in Fig. 4, the cross member 10 according to this embodiment is arranged on a bottom wall 11 of the box portion 3 to extend in one direction (left-and-right direction) such that two ends confront the side wall 13. The two ends of the cross member 10 are fixed to the side wall 13 via the brackets 9.

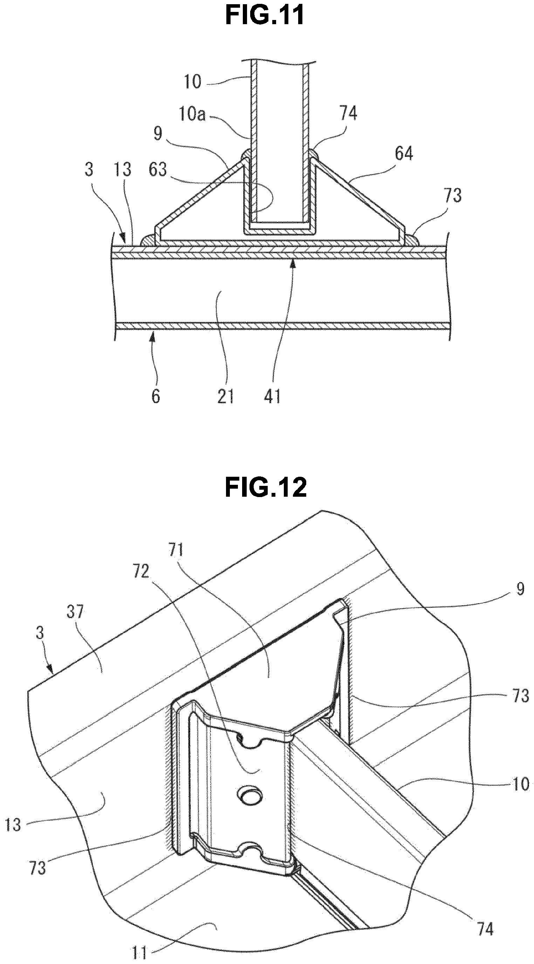

Fig. 11 shows the basic configuration of the bracket 9. The bracket 9 is formed into a substantially triangular shape in a planar view. A fitting portion 63 in which the cross member 10 is fitted is formed at the distal end that is the vertex of the bracket 9. A pair of brace portions 64 which tilt to gradually increase the interval in the front-and-rear direction toward the side wall 13 are provided on both sides of the fitting portion 63. The brace portions 64 support a main body portion 10a before the end portion of the cross member 10.

### (Fifth Embodiment)

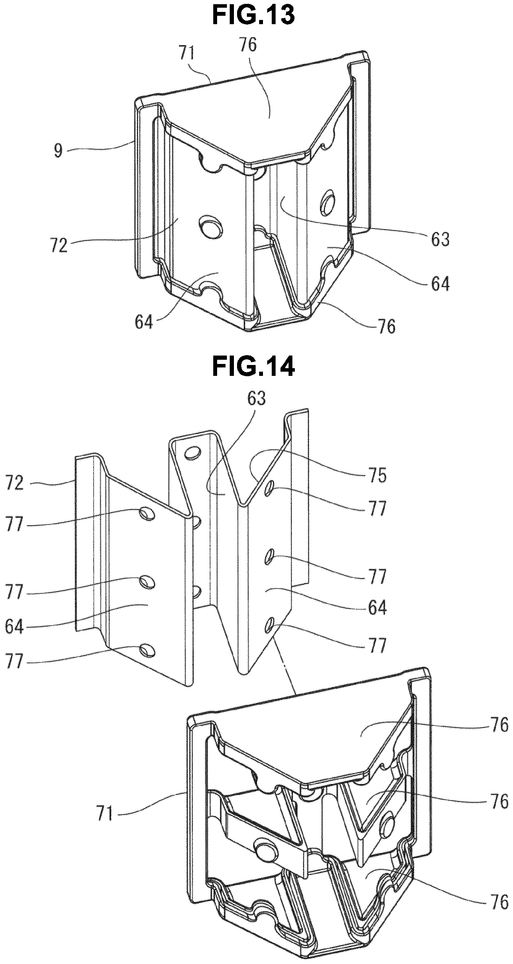

A bracket 9 is configured in detail, as shown in Figs. 12 to 17. As shown in Figs. 12 and 13, the bracket 9 according to this embodiment is formed by a case joining portion 71 welded to a side wall 13 of a box portion 3, and a core member 72 cast in the case joining portion 71. The case joining portion 71 is made of an aluminum alloy and welded to the side wall 13 of the box portion 3 at two ends in the front-and-rear direction. This welding is welding between aluminum materials. As shown in Fig. 14, the core member 72 is formed by bending a steel plate into a predetermined shape, and includes a fitting portion 63 and brace portions 64 described above. The core member 72 is welded to the cross member 10 in a state in which the cross member 10 is fitted in the fitting portion 63. This welding is welding between steel members.

As shown in Fig. 12, case side welding portions 73 that are welding portions between the case joining portion 71 and the side wall 13 are provided in ranges with backward diagonal hatching in Fig. 12, and extend from the upper end to the lower end of the case joining portion 71. Also, cross member side welding portions 74 that are welding portions between the core member 72 and the cross member 10 are provided in ranges with forward diagonal hatching in Fig. 12, and extend from the upper end to the lower end of the core member 72. That is, the bracket 9 is joined to the cross member 10 and the side wall 13 of the box portion 3 on lines extending in the vertical direction.

The bracket 9 according to this embodiment connects at least a first closed cross section portion 21 of an outer peripheral frame 6 formed by a hollow body and the cross member 10 formed by a hollow body such that these are aligned horizontally, as shown in Fig. 4.

As shown in Fig. 14, the core member 72 is a bent article whose cross section having a substantially W shape continues in the vertical direction (a direction orthogonal to the cross section). The case joining portion 71 that covers the core member 72 is provided with section holding walls 76 (see Figs. 14 to 16) made of walls that are formed to fill a concave portion 75 of the core member 72 opening toward the box portion 3. The bracket 9 according to this embodiment is provided with the section holding walls 76 at two end portions and the center portion in the vertical direction. However, when at least one section holding wall 76 is provided, a similar effect can be obtained.

A plurality of through holes 77 are formed in the brace portions 64 of the core member 72. The section holding walls 76 are fixed in a state in which these are flowed into the through holes 77. For this reason, the section holding walls 76 are locked by the through holes 77.

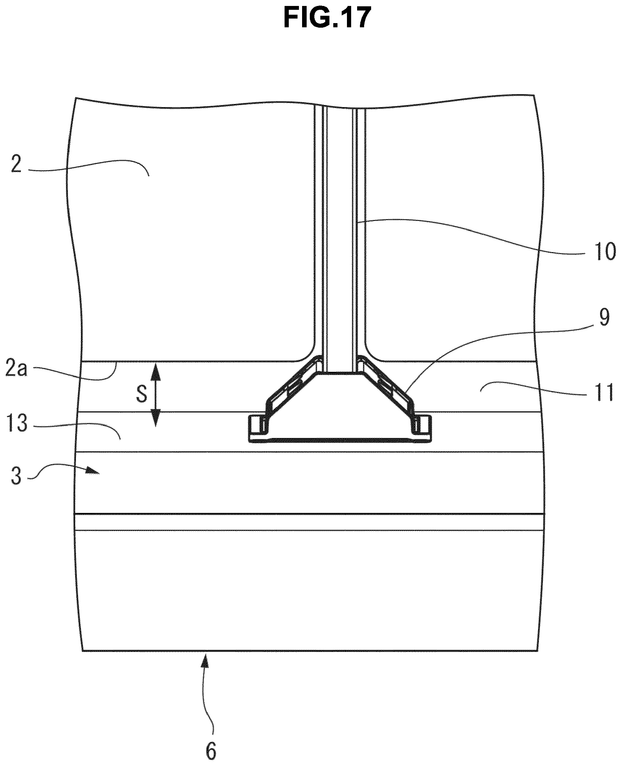

As shown in Fig. 17, a bracket arrangement space S is formed between the side wall 13 of the box portion 3 and batteries 2. The bracket 9 is arranged in the bracket arrangement space S and positioned between outer end portions 2a of the batteries 2 and the side wall 13 of the box portion 3.

In a battery case structure 1 thus configured, even if the outer peripheral frame 6 is broken by a side collision, there is no risk of water leakage from the outside into the interior because the batteries 2 are stored in the box portion 3 that is independent of the outer peripheral frame 6. A first closed cross section portion 21 of the outer peripheral frame 6 is formed by roll-forming or press-forming one or two steel plates 14. A second closed cross section portion 38 is formed by combining the box portion 3 and a concave portion 22 in contact with the first closed cross section portion 21. It is therefore possible to rationally obtain a plurality of closed cross sections using a small number of plate members and increase the strength/rigidity while reducing the weight.

Hence, according to the battery case structure 1 of this embodiment, it is possible to provide a battery case structure that can be formed lightweight at a low manufacturing cost and can also prevent water from entering into the case. In particular, since the outer peripheral frame 6 according to this embodiment is formed into a predetermined shape by roll forming or press forming, the length of the outer peripheral frame constituent component (steel plate) can easily be changed for a vehicle whose sizes in the front-and-rear and left-and-right directions are different.

In this embodiment, a cover 8 that is arranged along a bottom portion 42 of the box portion 3 is connected to the outer peripheral frame 6, thereby forming a third closed cross section portion 45. For this reason, when the outer peripheral frame 6 and the cover 8 are combined, a more complex closed cross section can be formed.

In this embodiment, closed cross section portions provided in the outer peripheral frame 6 are a fourth closed cross section portion 46 projecting toward a lower surface 47a of a side sill 47, and the first closed cross section portion 21 that is located above the fourth closed cross section portion 46 and confronts the cross members 10 arranged along the upper surface of the bottom portion 42 of the box portion 3. A lap joining portion 28 is arranged between the first closed cross section portion 21 and the fourth closed cross section portion 46.

For this reason, the battery case structure 1 is firmly fixed to the lower surface 47a of the side sill 47 by the fourth closed cross section portion 46 projecting toward the lower surface 47a of the side sill 47. Also, as indicated by an arrow in Fig. 4, a side collision load F1 applied from the side sill 47 can be supported by the cross members 10 via the first closed cross section portion 21. In addition, a side collision load F2 applied from the fourth closed cross section portion 46 is transmitted from the lap joining portion 28 to the first closed cross section portion 21 and further supported by the cross members 10 via the first closed cross section portion 21. Hence, even if the outer peripheral frame 6 is formed by a thin plate, it is possible to sufficiently support the side collision load and suppress the deformation of the box portion 3 (battery case).

The fourth closed cross section portion 46 according to this embodiment confronts reinforcing members 44 arranged along the upper surface of the cover 8. For this reason, as indicated by an arrow in Fig. 4, a side collision load F3 for the fourth closed cross section portion 46 can further be supported by the reinforcing members 44. Hence, even if the outer peripheral frame 6 is formed by a thin plate, it is possible to sufficiently support the side collision load and suppress the deformation of the box portion 3 (battery case).

The outer peripheral frame 6 according to this embodiment includes lap joining portions 27, 28, and 41 at three points. For this reason, as indicated by an arrow in Fig. 4, the side collision loads F1, F2, and F3 applied from the side sill 47 can be supported by the cross members 10 and the reinforcing members 44. Hence, even if the outer peripheral frame 6 is formed by a thin plate, it is possible to sufficiently support the side collision loads and suppress the deformation of the box portion 3 (battery case).

In the manufacturing method of the battery case structure 1 shown in Fig. 6, after the outer peripheral frame 6 is formed by roll forming, the lap joining portions are welded, thereby forming the first closed cross section portion 21.

When the steel plate 14 that is a thin plate is roll-formed, a plurality of closed cross section structures can be constructed, and more complex closed cross sections can be formed by combining the box portion 3. When the outer peripheral frame 6 is formed by roll forming, the length of the outer peripheral frame constituent component (steel plate) can easily be changed for a vehicle whose sizes in the front-and-rear and left-and-right directions are different.

In the manufacturing method of the battery case structure 1 shown in Fig. 7, the outer peripheral frame 6 is formed by press forming an outer member 51 and an inner member 52 and welding these. Hence, when the steel plate that is a thin plate is press-formed, a plurality of closed cross section structures can be constructed, and more complex closed cross sections can be formed by combining the box portion 3.

The cross-sectional shape of the reinforcing member 44 according to this embodiment is a substantially W shape. For this reason, as shown in Fig. 4, the side collision load F3 from the fourth closed cross section portion 46 can be more firmly supported by the reinforcing members 44. Hence, even if the outer peripheral frame 6 is formed by a thin plate, it is possible to sufficiently support the side collision load and suppress the deformation of the battery case.

The outer peripheral frame 6 according to this embodiment is made of a material whose tensile strength is higher than the box portion 3. For this reason, the outer peripheral frame 6 can be made lightweight using a thin plate such as a high tensile steel plate. Since the box portion 3 has a low strength and a high ductility, a deep box portion 3 can easily be formed by press forming.

The box portion 3 shown in Fig. 10 is partially made of a steel plate to cover a concave portion 22 of the outer peripheral frame 6 and form a second closed cross section portion 38. For this reason, a bottom wall 62 of the box portion 3 can be changed to a lightweight material such as a plastic material, and the weight can further be reduced.

The outer peripheral frame 6 according to this embodiment includes openings 39 in an outer surface 6a. For this reason, the side wall 13 of the box portion 3 and the outer peripheral frame 6 can be fixed by spot welding or mechanical fastening via the openings 39, thereby forming the lap joining portion 41.

The box portion 3 that stores the batteries 2 according to this embodiment is formed into a box shape including at least a bottom wall 11, and the side wall 13 extending over the whole region of the periphery along an outer edge 12. The cross members 10 extending in one direction and having two ends confronting the side wall 13 are provided on the bottom wall 11. The cross member 10 is fixed to the side wall 13 via the bracket 9. The bracket 9 has a substantially triangular shape in a planar view, and the cross member 10 is fitted in the distal end portion that is the vertex.

Hence, since the brace portions 64 on the front and rear sides have a reinforcing function, the bracket 9 having a substantially triangular shape in a planar view can transmit a load to the cross member 10 even in a case of a local collision such as a pole collision, thereby preventing interference between the battery case structure 1 and the batteries 2. In addition, the brace portions 64 can deform and absorb impact energy. Here, "pole collision" is a collision that occurs when a columnar body extending in the vertical direction locally collides against an electric vehicle from a side.

The bracket 9 according to this embodiment includes the pair of brace portions 64 and the fitting portion 63 sandwiched therebetween. The brace portions 64 support the main body portion 10a located closer to the center than an end portion of the cross member 10. Hence, since the load can be transmitted from the brace portions 64 to the main body portion 10a of the cross member 10, the cross member 10 never bend from the distal end as the starting point.

The box portion 3 shown in Fig. 3 is made of an aluminum alloy. The cross member 10 is made of a steel plate. The fitting portion 63 of the bracket 9 is made of a steel plate. The joining portion (case joining portion 71) of the bracket 9 to the box portion 3 is made of an aluminum alloy. Hence, even if the cross member 10 is formed by roll forming, and the end portion is vertical, as shown in Fig. 4, since the case joining portion 71 can be formed into a shape conforming to the tilting side wall 13 by casting using an aluminum alloy, the cross member 10 can easily be connected to the tilting side wall 13.

The bracket 9 according to this embodiment is a bent article whose cross section having a substantially W shape continues in the sectional direction, and includes at least one section holding wall 76. Hence, the strength of the brace portions 64 can easily be adjusted by the section holding wall 76.

The bracket 9 according to this embodiment includes the through holes 77 in the brace portions 64. The section holding walls 76 are locked by the through holes 77. For this reason, the section holding wall 76 can be set at the center of the brace portions 64 as well.

The section holding walls 76 according to this embodiment are arranged at the upper and lower ends. For this reason, a side collision load from the side wall 13 can be focused to the cross member 10.

The bracket 9 according to this embodiment is joined to the cross member 10 and the side wall 13 of the box portion 3 on lines extending in the vertical direction. Since this increases the bending strength in the vertical direction, the transmissibility of a side collision load to the cross member 10 can be improved.

The bracket 9 according to this embodiment is arranged between the outer end portions 2a of the batteries 2 and the case side wall (the side wall 13 of the box portion 3). Hence, even if the brace portions 64 are deformed by a side collision, these do not interfere with the batteries 2.

The outer peripheral frame 6 according to this embodiment is fixed to the vehicle body of an electric vehicle. The outer peripheral frame 6 is a hollow body extending in the front-and-rear direction, and the cross member 10 is a hollow body extending in the left-and-right direction. Hence, in a case of a side collision in the left-and-right direction, the cross members 10 are not crushed, but the outer peripheral frame 6 and the brackets 9 are crushed and deformed. For this reason, the case side wall (the side wall 13 of the box portion 3) does not interfere with the batteries 2, and the outer peripheral frame 6 and the brackets 9 can absorb impact energy that cannot be absorbed on the vehicle body side.

The outer peripheral frame 6 and the cross member 10 according to this embodiment, each of which is formed by a hollow body, are aligned horizontally. Hence, the outer peripheral frame 6 that is formed by a hollow body is readily crushed and deformed.

Note that as the joining method for forming the lap joining portions 27 and 28, any joining method such as fastening using rivets, fastening using bolts/nuts, laser welding, or mig welding can be employed in addition to spot welding. As for the joining method for joining the lap joining portion 41 between the upper vertical wall 33 and the side wall 13, spot welding can be changed to fastening using bolts/nuts or fastening using rivets to omit the openings 39 in the outer surface.

### (Sixth Embodiment)

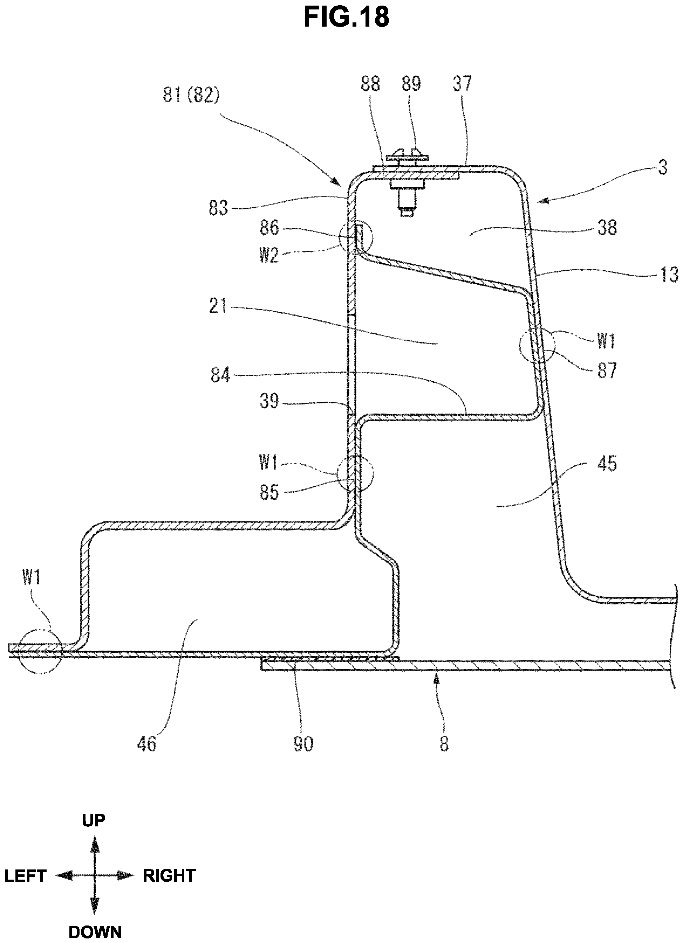

An outer peripheral frame and a box portion can be configured as shown in Fig. 18. In Fig. 18, members that are the same as or similar to those described with reference to Figs. 1 to 17 are denoted by the same reference numerals, and a detailed description thereof will be omitted.

Fig. 18 is a sectional view viewed from the rear side of the left side end portion of a battery case structure according to the sixth embodiment. An outer peripheral frame 81 shown in Fig. 18 is a side frame 82 provided on each of the left and right sides of a box portion 3. The side frame 82 is formed by an outer portion 83 made of a high strength steel plate, and an inner portion 84 that is made of a high strength steel plate and is thinner than the outer portion 83. The outer portion 83 and the inner portion 84 are each formed into a predetermined shape by hot stamping.

The outer portion 83 and the inner portion 84 have such shapes that a first closed cross section portion 21 and a fourth closed cross section portion 46 are formed by overlaying and welding these. Welding between the outer portion 83 and the inner portion 84 is done by spot welding and mig welding. In Fig. 18, a spot welding portion is indicated by W1, and a mig welding portion is indicated by W2. More specifically, of lap joining portions 85 and 86 at two points between the outer portion 83 and the inner portion 84, the lap joining portion 85 on the lower side is joined by spot welding. The lap joining portion 86 on the upper side is a portion to which the largest load is applied and is therefore joined by mig welding that is continuous welding. Continuous welding here means that the welding portion continues from the front end to the rear end of the side frame 82 without any interrupt in the longitudinal direction (front-and-rear direction) of the side frame 82.

The box portion 3 shown in Fig. 18 is formed by press-forming a steel plate into a box shape. The box portion 3 is connected to the side frame 82, thereby forming a second closed cross section portion 38. An overlap portion 87 that joins the side wall 13 of the box portion 3 to the inner portion 84 is joined by spot welding. A welding gun (not shown) used to perform the spot welding is pressed against the inner portion 84 via an opening 39 formed in the outer portion 83. The openings 39 are formed in the outer portion 83 at a predetermined interval in the longitudinal direction of the side frame 82.

An upper end flange 37 of the box portion 3 and an upper wall 88 of the outer portion 83 are mechanically connected by a rivet 89 or the like.

A cover 8 provided at the lower end of the box portion 3 and the fourth closed cross section portion 56 are joined using an adhesive 90 such that these are sealed.

The battery case structure shown in Fig. 18 is a full-steel battery case structure because the side frame 82 and the box portion 3 are wholly made of steel plates.

### (Seventh Embodiment)

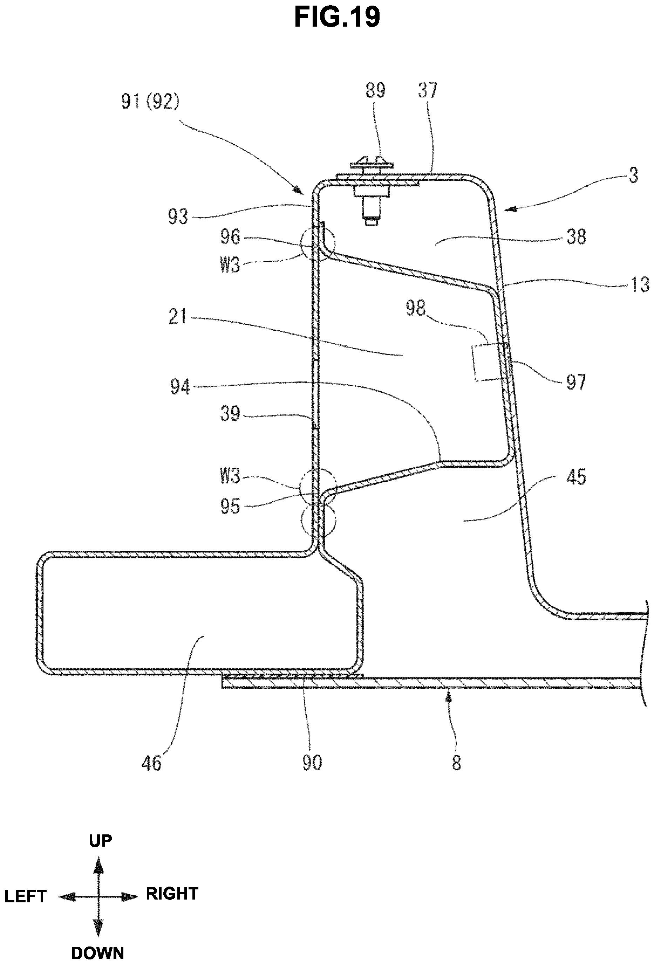

An outer peripheral frame and a box portion can be configured as shown in Figs. 19 to 23. In Figs. 19 to 23, members that are the same as or similar to those described with reference to Figs. 1 to 18 are denoted by the same reference numerals, and a detailed description thereof will be omitted.

Fig. 19 is a sectional view viewed from the rear side of the left side end portion of a battery case structure according to the seventh embodiment. An outer peripheral frame 91 shown in Fig. 19 is a side frame 92 provided on each of the left and right sides of a box portion 3. The side frame 92 is formed into a shape including a first closed cross section portion 21 and a fourth closed cross section portion 46 by performing roll forming for one high strength steel plate. Hence, an outer portion 93 and an inner portion 94 of the side frame 92 are integrally formed.

A lap joining portion 95 between the first closed cross section portion 21 and the fourth closed cross section portion 46 and a lap joining portion 96 that joins the distal end of the inner portion 94 to the outer portion 93 are each joined by overlaying two steel plates and performing laser welding.

The box portion 3 shown in Fig. 19 is a press-formed article made of an aluminum alloy to reduce the weight. In Fig. 19, a laser welding portion is indicted by W3.

An overlap portion 97 between a side wall 13 of the box portion 3 and the inner portion 94 is mechanically connected using a self-piercing rivet 98 or the like.

The battery case structure shown in Fig. 19 is a multi-material battery case structure including the side frame 92 made of a steel plate, and the box portion 3 made of an aluminum alloy.

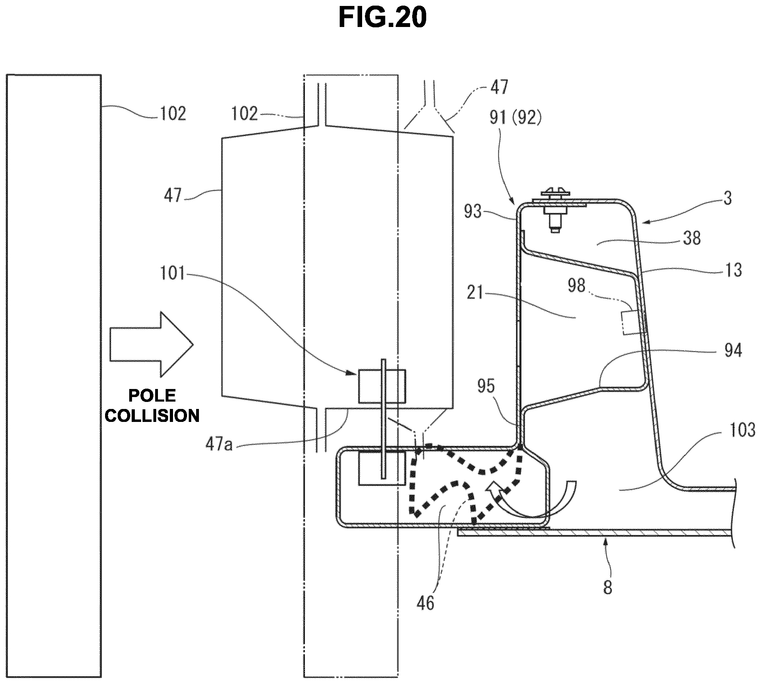

As shown in Fig. 20, the side frame 92 includes a rectangular fourth closed cross section portion 46 projecting to the outside in the vehicle width direction, which is connected to the first closed cross section portion 21 via the lap joining portion 95 and is offset-arranged outside and connected to a lower surface 47a of a side sill 47 of the vehicle body. The fourth closed cross section portion 46 shown in Fig. 20 includes an upper horizontal wall arranged to confront the lower surface 47a of the side sill 47 and is connected to the side sill 47 via a connecting member 101.

If a pole 102 collides from a side, the fourth closed cross section portion 46 is deformed as indicated by a broken line in Fig. 20. More specifically, for a pole collision, in the fourth closed cross section portion 46, the upper and lower horizontal walls buckle into the cross section such that the fourth closed cross section portion 46 rotates clockwise about the lap joining portion 95.

Hence, the fourth closed cross section portion 46 buckles by itself and thus separates from the bottom portion corner portion of the box portion 3, and rotates toward the first closed cross section portion 21, thereby absorbing impact energy. When the fourth closed cross section portion 46 is deformed, the batteries 2 can be prevented from being broken by a pole collision. Note that a peripheral component storage space 103 to arrange a cooling pipe, an electric cable, and the like is formed between the box portion 3 and the fourth closed cross section portion 46. For this reason, even if the fourth closed cross section portion 46 enters the inside of the vehicle body due to a pole collision or the like, the cooling pipe, the electric cable, and the like can be prevented from being damaged.

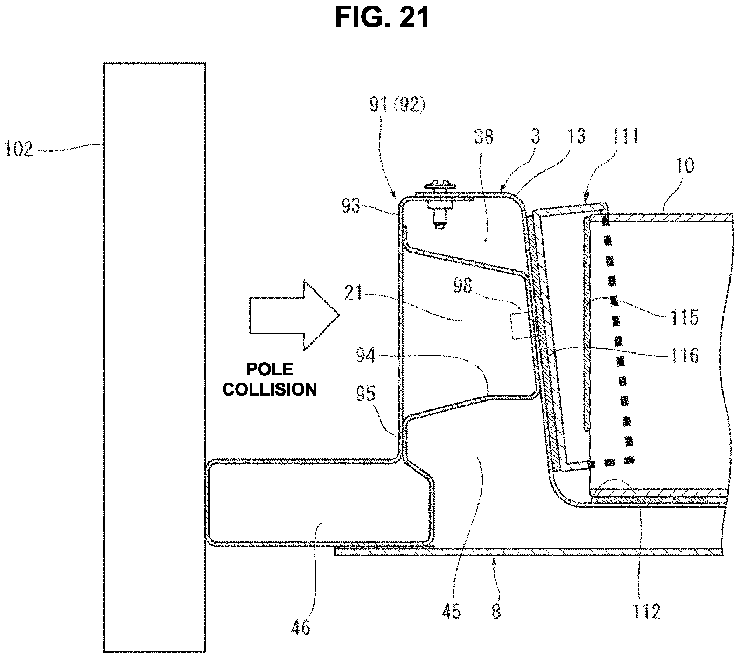

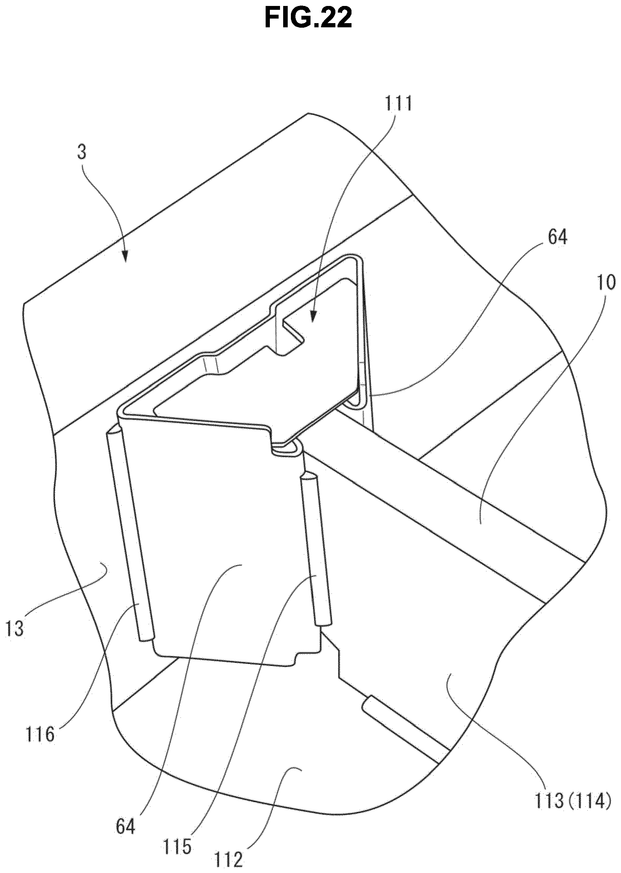

As shown in Figs. 21 and 22, a cross member 10 is fixed to the side wall 13 of the box portion 3 via a bracket 111. The bracket 111 shown in Fig. 22 is formed by combining a plurality of steel plates, and welded, by mig welding, to the box portion 3 made of a steel plate via welding portions 116 and to the cross member 10 via welding portions 115.

As shown in Fig. 21, the upper end of the cross member 10 is located at the same height as a second closed cross section portion 38 formed by the box portion 3 and the side frame 92. In addition, the lower end of the cross member 10 is located at the same height as a bottom surface 112 of the box portion 3. The cross member 10 includes a front wall 113 (see Fig. 22) and a rear wall 114, which extend in the vertical direction from the upper end to the lower end. The front wall 113 and the rear wall 114 are joined to the side wall 13 of the box portion 3 via the bracket 111 by the welding portions 115 continuously in the vertical direction.

At the connecting portions between the front wall 113 and the rear wall 114 and the bracket 111, the cross member side welding portions 115 that are the welding portions between the cross member 10 and the bracket 111 extend from the upper ends to the lower ends of the front wall 113 and the rear wall 114.

The case side welding portions 116 that are the welding portions between the bracket 111 and the side wall 13 extend from the upper end to the lower end of the bracket 111. This welding is performed by mig welding.

Since the cross member 10 is thus joined to the side wall 13 via the bracket 111, the front wall 113 and the rear wall 114 of the cross member 10 support impact by a side collision (pole collision) by whole surfaces via the first, second, and third closed cross section portions 21, 38, and 45.

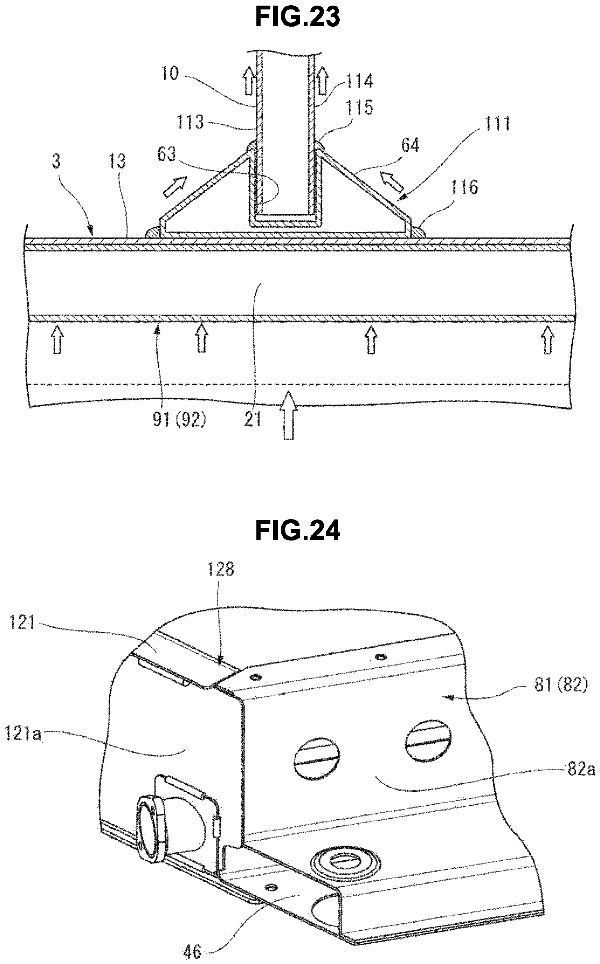

As shown in Fig. 23, the bracket 111 is formed into a triangular shape in a planar view, and the cross member 10 is inserted into the vertex portion and connected. Hence, as indicated by four arrows in Fig. 23, even if a local load by a pole collision is applied from a side to any portion in the total length of the box portion 3 in the front-and-rear direction, the load can be transmitted to the cross member 10 via the brace portions 64 of the bracket 111. That is, a local load in a wide range in the front-and-rear direction can be made to act on the cross member 10, and safety that is not limited by the collision position can be guaranteed. This performance is called robustness. Such a phenomenon is particularly useful in a pole collision.

### (Modifications of Outer Peripheral Frame)

The front end portion and the rear end portion of the battery case structure can be configured as shown in Figs. 24 to 35. In these drawings, members that are the same as or similar to those described with reference to Figs. 1 to 23 are denoted by the same reference numerals, and a detailed description thereof will be omitted.

Figs. 24 to 29 are perspective views and sectional views in which a front cross member 121 and a rear cross member 122 are joined to the front and rear ends of the side frame 82 according to the sixth embodiment, respectively.

The front cross member 121 extending in the left-and-right direction is connected to the front end of the side frame 82, thereby forming the front end portion of the battery case structure. The rear cross member 122 extending in the left-and-right direction is connected to the rear end of the side frame 82, thereby forming the rear end portion of the battery case structure.

The front cross member 121 and the rear cross member 122 include front walls 121a and 122a located on the front side of the electric vehicle, and rear walls 121b and 122b located on the rear side of the electric vehicle with respect to the front walls 121a and 122a. The portions of the front cross member 121 and the rear cross member 122, where the front walls 121a and 122a and the rear walls 121b and 122b are provided, form closed cross section portions 123 and 124 having cross-sectional shapes viewed from the left-and-right direction.

Of the front walls 121a and 122a and the rear walls 121b and 122b, walls far from the box portion 3 (the front wall 121a if the front cross member 121 and the rear wall 122b of the rear cross member 122) are connected, by welding, to the distal end of the outer wall 82a of the side frame 82.

Of the front walls 121a and 122a and the rear walls 121b and 122b, other walls close to the box portion 3 (the rear wall 121b of the front cross member 121 and the front wall 122a of the rear cross member 122) are connected by welding in a state in which these are fitted in the side frame 82.

More specifically, a portion 125 that forms the first closed cross section portion 21 of the side frame 82 is formed into a projecting shape toward the box portion. Of the front walls 121a and 122a and the rear walls 121b and 122b, other walls close to the box portion 3 (the rear wall 121b of the front cross member 121 and the front wall 122a of the rear cross member 122) include notches 126 and 127, each of which has a shape for receiving the projecting portion 125 forming the first closed cross section portion 21 of the side frame 82, and are welded and connected to the projecting portion 125 inserted into the notches 126 and 127.

The upper surfaces of the front cross member 121 and the rear cross member 122 according to this embodiment and an upper surface (upper wall) formed by the upper end of the outer wall 82a of the side frame 82 bent in the horizontal direction form an attachment surface 128 to which the upper end flange 37 of the box portion 3 is attached on whole circumference. Hence, in a state in which the box portion 3 is attached to the attachment surface 128, the side frame 82 is connected to the front cross member 121 and the rear cross member 122 via the box portion 3. Hence, when this configuration is employed, the second closed cross section portions 38 of the left and right side frames continue to the closed cross sections 123 and 124 of the front cross member and the rear cross member and form an annular skeleton along the opening of the box portion, thereby improving the strength and rigidity of the battery case structure while reducing the weight by effectively using existing components.

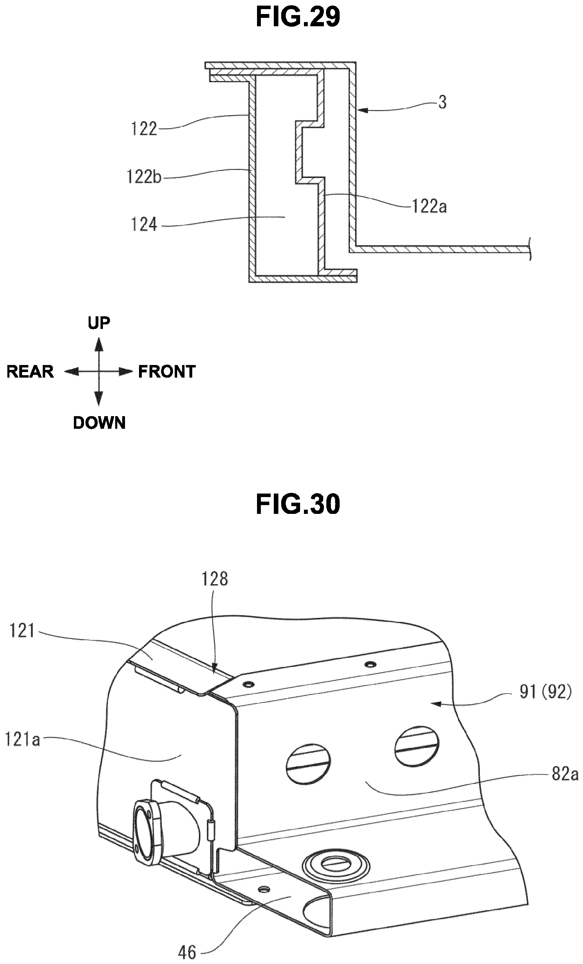

Figs. 30 to 33 are perspective views in which the front cross member 121 and the rear cross member 122 are joined to the front and rear ends of the side frame 92 according to the seventh embodiment, respectively. The method of joining the front cross member 121 and the rear cross member 122 to the side frame 92 is the same as the joining method shown in Figs. 24 to 29.

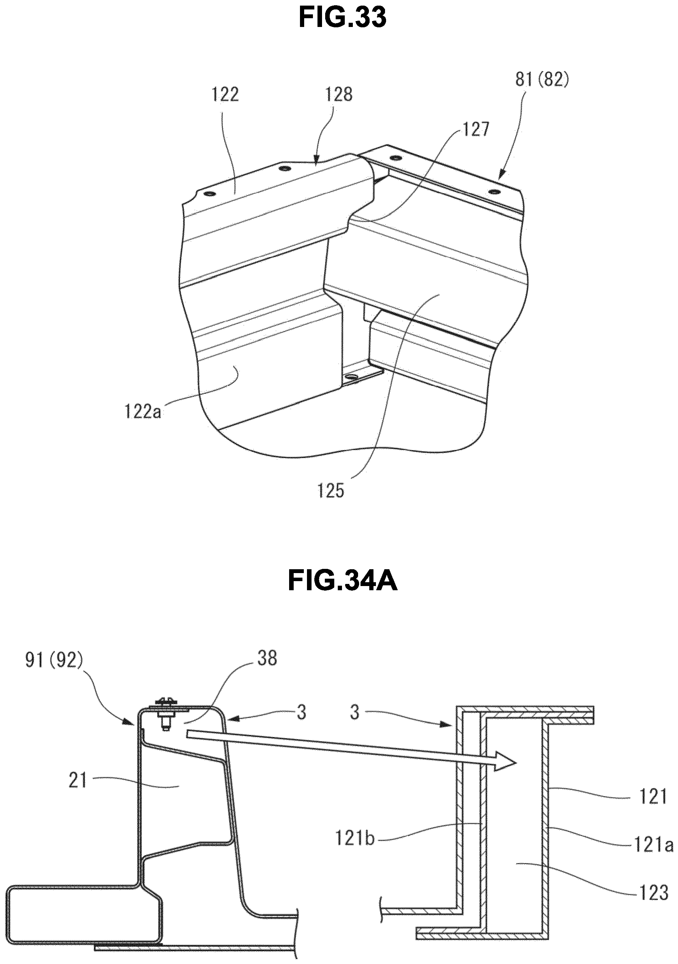

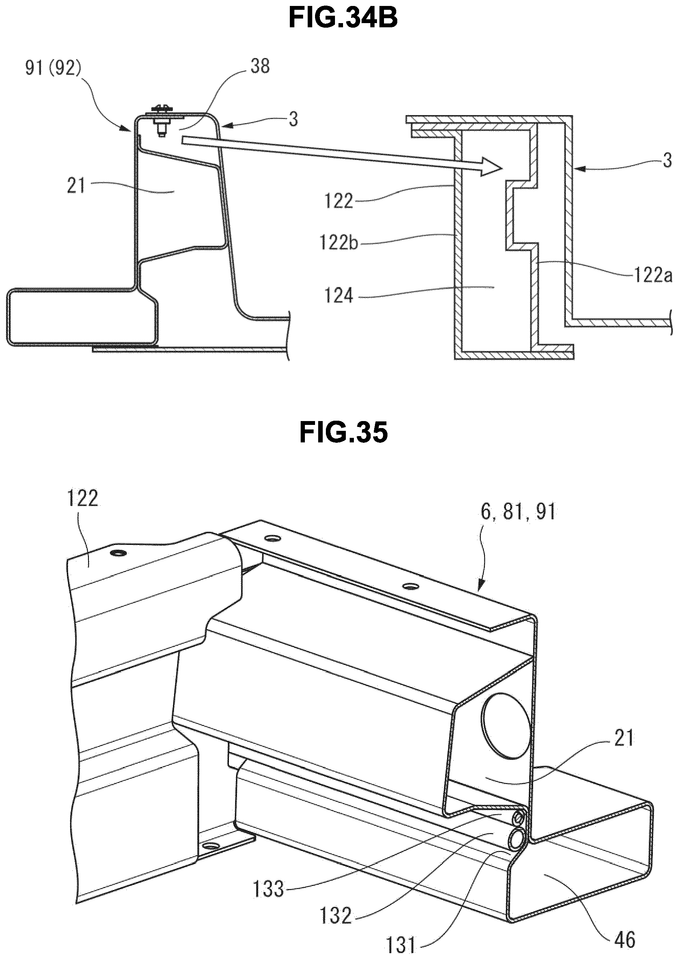

Figs. 34A and 34B are sectional views schematically showing that the second closed cross section portion 38 formed by the side frame 92 and the box portion 3 is connected to the closed cross section portion 123 of the front cross member 121 and the closed cross section portion 124 of the rear cross member 122.

When the front cross member 121 is connected to the side frame 92, the closed cross section portion 123 of the front cross member 121 is connected to the first closed cross section portion 21 and the second closed cross section portion 38. Also, when the rear cross member 122 is connected to the side frame 92, the closed cross section portion 124 of the rear cross member 122 is connected to the first closed cross section portion 21 and the second closed cross section portion 38. When the first closed cross section portion 21 and the second closed cross section portion 38 are thus connected to the closed cross section portion 123 of the front cross member 121 and the closed cross section portion 124 of the rear cross member 122, the strength/rigidity of the battery case structure further increases.

A portion between the fourth closed cross section portion 46 and the first closed cross section portion 21 of each of the outer peripheral frames 6, 81, and 91 shown in the above-described embodiments is formed to form a groove-shaped concave portion 131, as shown in Fig. 35. Note that Fig. 35 is drawn using the outer peripheral frame 91 (side frame 92) described in the seventh embodiment. The concave portion 131 opens toward the box portion 3 and extends in the front-and-rear direction. In the outer peripheral frames 6, 81, and 91, since lap joining is performed between the first closed cross section portion 21 and the fourth closed cross section portion 46, the first closed cross section portion 21 and the fourth closed cross section portion 46, which are arranged in the vertical direction, are interrupted. However, since the groove-shaped concave portion 131 extending in the front-and-rear direction is formed between the first closed cross section portion 21 and the fourth closed cross section portion 46, the strength/rigidity of the battery case structure can be compensated by the reinforcement of the concave portion 131.

In addition, as shown in Fig. 35, a cooling pipe 132, a high-voltage line 133, and the like can be stored in the concave portion 131.

### Explanation of the Reference Numerals and Signs

1...battery case structure, 2...battery, 2a...outer end portion, 3...box portion, 6, 81, 91...outer peripheral frame, 6a...outer surface, 8...cover, 9, 111...bracket, 10...cross member, 10a...main body portion, 11...bottom wall, 12...outer edge, 13...side wall, 21...first closed cross section portion, 22... concave portion, 23-26...bending portion, 27, 28, 41...lap joining portion, 31...upper horizontal wall, 32...lower horizontal wall, 33...upper vertical wall, 34...projecting piece, 35...lower vertical wall, 38...second closed cross section portion, 39... opening, 42...bottom portion, 44...reinforcing member, 45...third closed cross section portion, 46...fourth closed cross section portion, 47...side sill, 47a...lower surface, 51...outer member, 52...inner member, 61...upper side wall, 62...bottom wall, 64...brace portion, 63...fitting portion, 73...case side welding portion, 74...cross member side welding portion, 76...section holding wall, 77...through hole, 82...side frame, 92...side frame, 103...deformation allowable space, 121...front cross member, 122...rear cross member, 123, 124...closed cross section portion, 125...projecting portion, 126, 127...notch, 131... concave portion, 132 ... cooling pipe, 133...high-voltage line, S1...roll forming step, 511...press forming step, S12...bending step, S2, 513...welding step.

## Claims

1. A battery case structure that supports a driving battery under a floor of an electric vehicle, comprising:
an outer peripheral frame including a first closed cross section portion which is formed by joining a second steel plate portion to a first steel plate portion having a groove-shaped cross-sectional shape in an overlaid state and has a closed cross-sectional shape, and a concave portion which is adjacent to the first closed cross section portion and has a groove-shaped cross section; and
a box portion opening upward and configured to store the battery,
wherein the box portion closes the concave portion, thereby forming a second closed cross section portion adjacent to the first closed cross section portion and having a closed cross-sectional shape.

2. The battery case structure according to claim 1, further comprising a cover arranged along a lower surface of a bottom wall of the box portion,
wherein the cover is connected to the outer peripheral frame, and
the cover and the outer peripheral frame form a third closed cross section portion having a closed cross-sectional shape.

3. The battery case structure according to claim 1, wherein
the electric vehicle includes a side sill extending in a front-and-rear direction on each of sides in a left-and-right direction,
the outer peripheral frame includes a fourth closed cross section portion formed to project toward an outside of the electric vehicle along a lower surface of the side sill and having a closed cross-sectional shape when viewed from the front-and-rear direction of the electric vehicle,
the box portion includes a cross member arranged along an upper surface of the bottom wall,
the first closed cross section portion is formed above the fourth closed cross section portion and confronts the cross member, and
a lap joining portion in which the second steel plate portion is joined to the first steel plate portion in the overlaid state is provided between the fourth closed cross section portion and the first closed cross section portion.

4. The battery case structure according to claim 3, further comprising a cover configured to cover a lower portion of the box portion,
wherein a reinforcing member along an upper surface of the cover is arranged on the upper surface, and
the fourth closed cross section portion confronts the reinforcing member.

5. The battery case structure according to claim 1, wherein the outer peripheral frame includes, at at least three points including a portion forming the first closed cross section portion and a portion overlapping the box portion, lap joining portions joined in a state in which members are overlaid on each other.

6. A method of manufacturing an outer peripheral frame used in a battery case structure according to claim 1, wherein
after the outer peripheral frame is formed by roll forming and press forming, bending is performed, and a lap joining portion that is a portion where a first steel plate portion and a second steel plate portion are overlaid is then welded, thereby forming a first closed cross section portion.

7. A method of manufacturing an outer peripheral frame used in a battery case structure according to claim 1, wherein
the outer peripheral frame is formed by press-forming an outer member and an inner member and welding the outer member and the inner member.

8. The battery case structure according to claim 4, wherein a cross-sectional shape of the reinforcing member is a W shape.

9. The battery case structure according to claim 1, wherein the outer peripheral frame is made of a material whose tensile strength is higher than the box portion.

10. The battery case structure according to claim 1, wherein
the box portion is formed by an upper side wall that closes the concave portion, and a box-shaped bottom wall connected to the upper side wall, and
the upper side wall is made of a steel plate.

11. The battery case structure according to claim 5, wherein an opening is formed in an outer surface that forms the first closed cross section portion of the outer peripheral frame.

12. The battery case structure according to claim 1, wherein
the box portion that stores the battery is formed into a box shape including at least a bottom wall, and a side wall extending over a whole region of a periphery along an outer edge,
a cross member extending in one direction and having two ends confronting the side wall is provided on the bottom wall,
the cross member is fixed to the side wall via a bracket, and
the bracket has a substantially triangular shape in a planar view, and the cross member is fitted in a distal end portion of the bracket that is a vertex.

13. The battery case structure according to claim 12, wherein
the bracket includes a pair of brace portions and a fitting portion sandwiched therebetween, and
the brace portions support a main body portion located closer to a center than an end portion of the cross member.

14. The battery case structure according to claim 13, wherein
the box portion is made of an aluminum alloy,
the cross member is made of a steel plate,
the fitting portion of the bracket is made of a steel plate, and
a joining portion of the bracket to the box portion is made of an aluminum alloy.

15. The battery case structure according to claim 13, wherein the bracket is a bent article whose cross section having a W shape formed by the pair of brace portions and the fitting portion continues in a direction orthogonal to the cross section, and includes at least one section holding wall formed to fill between the brace portions and the fitting portion.

16. The battery case structure according to claim 15, wherein
the bracket includes a through hole in the brace portion, and
the section holding wall is locked by the through hole.

17. The battery case structure according to claim 16, wherein the section holding wall is arranged at each of upper and lower ends of the bracket.

18. The battery case structure according to claim 12, wherein the bracket is joined to the cross member and the side wall of the box portion on a line extending in a vertical direction.

19. The battery case structure according to claim 12, wherein the bracket is arranged between an end portion of the battery and the side wall of the box portion.

20. The battery case structure according to claim 12, wherein
the outer peripheral frame is fixed to a vehicle body of the electric vehicle and is a hollow body extending in a front-and-rear direction, and
the cross member is a hollow body extending in a left-and-right direction.

21. The battery case structure according to claim 20, wherein the outer peripheral frame and the cross member, each of which is formed by the hollow body, are aligned horizontally.

22. The battery case structure according to claim 3, wherein a peripheral component storage space is formed between the box portion and the fourth closed cross section portion.

23. The battery case structure according to claim 1, wherein
the outer peripheral frame is a side frame extending in a front-and-rear direction of the electric vehicle on both sides of the box portion in a left-and-right direction of the battery case structure,
a portion of the side frame forming the first closed cross section portion is formed into a projecting shape projecting toward the box portion,
a front cross member extending in the left-and-right direction is connected to a front end of the side frame,
a rear cross member extending in the left-and-right direction is connected to a rear end of the side frame,
the front cross member or the rear cross member includes a front wall located on a front side of the battery case structure and a rear wall located on a rear side of the electric vehicle with respect to the front wall,
a portion of the front cross member or the rear cross member, where the front wall and the rear wall are provided, is formed to have a closed cross-sectional shape viewed from the left-and-right direction,
of the front wall and the rear wall, a wall far from the box portion is connected to a distal end of an outer wall of the side frame,
of the front wall and the rear wall, the other wall close to the box portion includes a notch which has a shape for receiving the projecting portion of the side frame, and is connected to the projecting portion inserted into the notch, and
respective upper surfaces of the front cross member and the rear cross member, and an upper wall formed by an upper end of the outer wall of the side frame bent in a horizontal direction and toward a side of the box portion, form an attachment surface to which the box portion or an upper end flange of the box portion is attached on whole circumference.

24. The battery case structure according to claim 23, wherein the portion of the front cross member or the rear cross member forming the closed cross section continues to the second closed cross section portion of the side frame.

25. The battery case structure according to claim 23, wherein
the electric vehicle includes a side sill extending in the front-and-rear direction on each of sides in the left-and-right direction,
the side frame includes a fourth closed cross section portion formed to project toward an outside of the electric vehicle along a lower surface of the side sill and having a closed cross-sectional shape when viewed from the front-and-rear direction of the electric vehicle, and
a portion between the fourth closed cross section portion of the side frame and the first closed cross section portion is formed by a groove-shaped concave portion opening toward the box portion and extending in the front-and-rear direction.

26. The battery case structure according to claim 25, wherein
a cooling pipe and a high-voltage line are stored in a space in the concave portion.
